# EUROPEAN PATENT APPLICATION

(11) **EP 3 346 605 A1**
(43) Date of publication of application: **11.07.2018**
(21) Application number: 17195566.9
(22) Date of filing: 09.10.2017
(51) Int. Cl.: H02S 40/44

(54) **THERMAL-PHOTOVOLTAIC SOLAR SYSTEM, INSTALLATIONS COMPRISING THERMAL-PHOTOVOLTAIC SOLAR SYSTEMS, AND USE THEREOF**

(30) Priority: 09.01.2017 EP 17305017
(71) Applicant: Imerys TC, 69543 Champagne au mont d'or Cedex (FR)
(72) Inventor: JONNARD, Pierre, 69490 St Forgeux (FR)
(74) Representative: Haseltine Lake LLP

(57) **Abstract**

The present invention relates to thermal-photovoltaic hybrid solar system (1) comprising a substantially planar photovoltaic panel (2) and a substantially planar thermal collector (3), wherein the said photovoltaic panel (2) and the said thermal collector (3) are stacked such that their respective planar faces are substantially parallel, and wherein a layer of graphite (6) is arranged between the said photovoltaic panel (2) and the said thermal collector (3). The present invention further relates to assemblies comprising said systems, as well as their use.

## Description

### FIELD OF THE INVENTION

The present invention relates to solar systems, more specifically to thermal-photovoltaic hybrid solar systems. The solar systems according to the present invention comprise a dual function of production of electrical energy from a photovoltaic panel and production of heat from a thermal panel. The present invention further relates to modules, assemblies, installations and the like, comprising the said thermal-photovoltaic hybrid solar systems. The present invention further relates to the use of thermal-photovoltaic hybrid solar systems, as well as modules, assemblies and installations comprising the said thermal-photovoltaic hybrid solar systems, in the provision of electrical energy and/or heat to buildings, such as family homes, office buildings, commercial buildings, industrial buildings and the like, as well as solar PV fields combined with heat production for buildings industries or greenhouse plants.

### BACKGROUND OF THE INVENTION

The use of thermal collectors for the production of heat, for example in heating buildings or in providing hot water, has been known since antiquity and used commercially since at least the early 20^{th} century. With the use of heat pumps, such as for example vapour-compression refrigeration, the physical transfer of heat, for example in air conditioners, refrigerators or underfloor heating, among a multitude of other applications, has become practical and widely available.

The use of photovoltaic panels converts sun rays directly into electricity taking advantage of the photovoltaic effect. The operation of a photovoltaic (PV) panel requires three basic operations, namely the absorption of light, the separation of charge carriers of opposite types, and the separate extraction of those carriers to an external circuit. Solar cells can be used to power small devices, such as pocket calculators, or large numbers of solar cells may be combined into solar panels for the production of electrical energy in amounts sufficient to either power isolated units such as family homes, or to feed electrical energy into larger grids.

One common disadvantage of solar panels is their tendency to reduce efficiency as their own temperature increases. In general, an optimum working temperature for a solar panel is below the temperatures obtained during operation in direct sunlight. In fact, solar panels become more efficient the lower the temperature drops, even at temperatures below normal ambient temperature. The use of thermal-photovoltaic hybrid solar systems has therefore been proposed, wherein a photovoltaic panel is combined with a thermal collector in connection with a cooling circuit, wherein the thermal collector serves to cool the photovoltaic panel and at the same time provide thermal energy.

DE 4306409 A1, for example, discloses a device for producing electrical energy and heat, wherein a solar thermal collector is combined with a PV panel, and the heat provided by the solar thermal collector is stored in a heat reservoir, using a heat pump powered by the electrical energy from the PV panel. The thermal collector and the PV panel are combined, such that the heat evacuated from the thermal collector by the heat pump does not directly cool the solar cell. During operation, the temperature of the PV panel will rise, and its efficiency drop.

FR 2 981 202 discloses a thermal-photovoltaic hybrid solar system, wherein a thermal collector is placed underneath a PV panel and connected to a heat pump in order to cool down the PV panel in operation. The transfer of heat between the PV panel and the thermal collector at least partially occurs by conduction via ambient air or convection. The contact surface between the PV panel and the thermal collector is low, such that the heat transfer remains low and the cooling action to the PV panel remains limited. Moreover, air is not a good heat conductor.

FR 2 970 562 discloses a thermal-photovoltaic hybrid solar system, wherein a thermal collector consisting of channels formed by two metallic plates and a refrigerant, attached to a heat pump, provide cooling to the solar panel. One of the metallic plates is glued directly onto the rear (non-transparent) face of the PV panel, such that any surplus heat from the PV panel is transferred to the refrigerant by thermal conduction through the metallic plate. The use of a solid metallic plate glued to the rear of the PV cell leads to reduced heat conduction between the PV panel and the refrigerant as the materials are deformed by thermal or mechanical action, or as the effect of the glue deteriorates over time, because the contact between the PV panel and the refrigerant is reduced. Moreover, glues generally have low heat conductivity.

The state of the art therefore constitutes a problem.

### SHORT DESCRIPTION OF THE INVENTION

The present invention is defined in the appended claims.

In particular, the present invention is embodied by a thermal-photovoltaic hybrid solar system comprising a substantially planar photovoltaic panel and a substantially planar thermal collector, wherein the photovoltaic panel and the thermal collector are stacked such that their respective planar faces are substantially parallel. According to the present invention, a layer of graphite is arranged between the photovoltaic panel and the thermal collector. It was found that this arrangement improves conductive heat transfer. Graphite has excellent thermal conductivity and flexibility in order to ensure maximum thermal transfer between the PV panel and the thermal collector.

According to one embodiment, the layer of graphite comprises flake graphite. It was found that flake graphite is particularly suited for application in the present invention.

According to one embodiment, the layer of graphite comprises one or more layers of graphite sheet. It was found that graphite sheet is particularly suitable for use in the present invention. The said sheets may have a thickness from 0.020 mm to 10 mm. The graphite layer as a whole may have a thickness from 0.02 mm to 25 mm.

According to one embodiment, the layer of graphite is essentially pure graphite. In accordance with the present invention, the layer of graphite may be pure graphite, or graphite with a purity that qualifies as essentially pure. It was found that the advantages of the present invention are obtained for various degrees of purity of the graphite.

According to one embodiment, the photovoltaic cell and the thermal collector may be panel shaped. It was found that the present invention is especially suited for use in combination with a planar solar panel and a thermal collector of similar shape, wherein the said layer of graphite may be cut to have a corresponding shape, in order to provide good contact and ideal heat transfer between the PV panel and the thermal collector.

According to one embodiment, the thermal collector is of the roll-bond type. So called roll-bond absorbers, which generally consist of aluminium, consist of pairs of profiled aluminium sheet, which are bound together at contacting portions. The geometry of the aluminium plates defines a channel structure which may be freely adapted according to the specific requirements dictated by the application, the geometry and other factors.

According to one embodiment, the thermal collector is connected to a cooling circuit comprising a cooling fluid which can be either a gas or a liquid. According to one embodiment, the cooling circuit is used to provide hot water. The presence a cooling circuit including a cooling fluid, or a refrigerant, improves efficiency of the PV panel by cooling it, and simultaneously allows for the production of hot water with improved heat transfer via a heat pump in order to provide hot water. In one alternative embodiment, the hot water may be used to drive a generator to provide additional electricity. According to another embodiment, the cooling circuit can utilize a gas, such as for example a conventional refrigerant gas, to transfer heat against the normal temperature gradient using a heat pump type vapor compression refrigeration system. Such a system has the advantage of being able to transfer hear from the outside environment, and thereby cool the PV cells, Eeven at night or when the outdoor temperatures are low or even sub-zero. The good thermal conduction between the two panels allows the thermal panel to work with its two faces.

According to further embodiments of the present invention, the thermal collector is heated by heat conduction from the PV panel, and/or by convection from ambient air, and/or by solar radiation. Depending on the design of the thermal-photovoltaic hybrid solar system according to the invention, and in accordance with the specific requirements of its application, it was found that the thermal collector may be configured such that it may be exposed to the PV panel, solar radiation and ambient air at varying degrees, in order to improve efficiency of the thermal-photovoltaic hybrid solar system according to the present invention.

According to further embodiments of the present invention, the thermal-photovoltaic hybrid solar system according to the invention is integrated into an article that is exposed to sunlight and/or artificial light during normal use, such as for example a roof element. It was found that the thermal-photovoltaic hybrid solar systems according to the present invention could, in view of their ability to be shaped into panels, easily be integrated into planar surfaces, such as for example the surface of roof tiles, in order to provide electrical energy and/or heat.

Also part of the present invention are assemblies of multiple thermal-photovoltaic hybrid solar systems according to the invention, in order to provide solar modules, solar panels or solar installations, or the like. Such modules may be integrated, for example as part of a family home, such as on the roof of a family home. In one embodiment, such modules may be formed by a number of thermal-photovoltaic hybrid solar systems, each integrated into a roof, upon installation of the said roof elements when forming a roof of a family home. Alternatively, the said thermal-photovoltaic hybrid solar systems may be combined and assembled on panels to be placed on a roof of a family home, or as part of a solar installation or a solar power plant.

Also part of the present invention is the use of the thermal-photovoltaic hybrid solar systems according to the invention in the supply of energy, for example supplying energy to an isolated system, such as a ship, a plane, a road vehicle or to a building, such as a family home, an office building, or an industrial installation, or to provide electrical energy or heat for feeding into a power supply system, such as a power network or a national grid or public grid.

### SHORT DESCRIPTION OF THE FIGURES

The invention will be further illustrated by reference to the following figures:
Fig. 1 represents a schematic cut through a thermal-photovoltaic hybrid solar system according to the present invention;
Fig. 2 shows a portion of a roof of a family home, displaying a possible embodiment of the present invention.

It is understood that the following description and references to the figures concern exemplary embodiments of the present invention and shall not be limiting the scope of the claims.

### DETAILED DESCRIPTION OF THE INVENTION

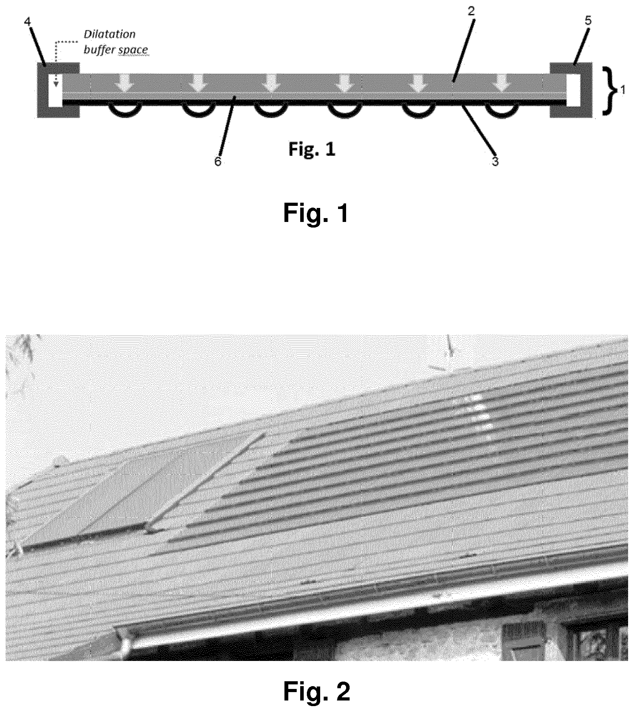

The present invention is embodied by the combination of a PV panel with a thermal collector, coupled together in a thermal-photovoltaic hybrid solar system, as shown in Fig. 1. A thermal-photovoltaic hybrid solar system 1 comprises a PV panel 2 and a thermal collector 3, held together by fixation means 4, 5. The fixation means 4, 5 may be mechanical fixation means, such as clamps, screws, bolts or the like, or adhesive fixation means, such as glue, paste, plaster, or similar, but allowing for different specific dilatations of the PV and the thermal panels, by use of a dilatation buffer space.

According to the present invention, the thermal-photovoltaic hybrid solar system 1 comprises a graphite layer 6, disposed between the PV panel 2 and the thermal collector 3. The said graphite layer 6 is in direct contact with both the PV panel 2 and the thermal collector 3, such that a tight assembly is formed within the thermal-photovoltaic hybrid solar system 1, wherein PV panel 2, thermal collector 3 and graphite layer 6 are maintained in close contact by fixation means 4,5. For example, the elements are maintained such that only a PV panel 2, a graphite layer 6 and a thermal collector 3 are comprised within the fixation of fixation means 4, 5.

As is known to the skilled person, the PV panel 2 is connected by electrical connection to a rechargeable battery system and/or to an electrical distribution system. For example, the PV panel may feed electrical energy to a rechargeable battery. The PV panel may also feed electrical energy directly into the power circuit of a building, such as a family home or an office building, or the like. The PV panel may also feed electrical energy into a power grid.

The thermal collector 3 may be a roll-bond type, used as an evaporator in a thermodynamic circuit for the production of heat. According to the present invention, on the one hand, the temperature in the thermal collector is increased in order to drive the thermodynamic circuit, and, on the other hand, the temperature in the PV panel is reduced, in order to increase the efficiency of the PV cell. The thermal collector 3 is arranged at the rear face of the PV panel 2, i.e. the face that is not normally exposed to radiation such as sunlight or artificial light. According to the present invention, a graphite layer 6 is arranged between the thermal collector 3 and the PV panel 2.

A thermal collector 3 of the roll-bond type comprises an integrated circuit within which a refrigerant circulates. The refrigerant may be water, or any other fluid, either liquid or gas. Common refrigerants are known to the skilled person in the art, and can include for example chlorofluorocarbons, hydrofluorocarbons, hydrochlorofluorocarbons, carbon dioxide, nitrogen, hydrogen, helium, air, among others. The gaseous refrigerants advantageously reduce the risk of overheating the PV cells and serve to improve efficiency of the PV cells by lowering their temperature, even lin low ambient temperatures, cloudy conditions or at night. The good transfer conditions improve the thermal panel performance. The thermal collector 3 may absorb energy on both faces, i.e. the face orientated towards the PV panel 2 via the graphite layer 6, and the face opposite to the PV panel 2. The face orientated towards the PV panel 2 may predominantly absorb heat energy by conduction from the PV panel 2 which is transferred by thermal conduction and convection. The face opposite the PV panel 2 may absorb heat energy, by convection from the ambient air and/or by radiation from sunlight or artificial light.

The energy absorbed by the thermal collector 3 is evacuated in the form of heat by the refrigerant, and may be used to provide heat or electrical energy. In a thermodynamic cycle, as known the skilled person in the art, a compressor drives the refrigerant in gaseous form from a hot high pressure end towards a water condenser, where hot water is produced and the refrigerant is cooled. The refrigerant is then passed back to the thermal collector 3, which acts as the evaporator in the cycle, in which the refrigerant is heated again and the pressure rises, and the compressor pumps the refrigerant to the condenser again.

Since the thermal collector 3 is heated by conduction and convection from the PV panel 2, the PV panel 2 is cooled in the process, maintaining its temperature low, and improving efficiency of the PV panel 2. At the same time, the condenser provides either hot water for use in a building, such as a family home or an office building, or drives a turbine to produce electrical energy.

The present invention is characterised in that the PV panel 2 and the thermal collector 3 are not in direct contact with each other. The gap between the PV panel 2 and the thermal collector 3 is filled by a graphite layer 6. Graphite has excellent thermal conductivity and any surplus thermal energy form the PV panel 2 will be evacuated efficiently towards the thermal collector 3 via the said layer of graphite 6. The graphite layer may be configured to ensure complete or nearly complete contact between the PV panel and the thermal collector, thereby facilitating efficient conductive heat transfer. In addition, the graphite layer may absorb the dilatation differences between the PV panel and the thermal collector due to differential thermal expansion coefficients.

The layer of graphite 6 may be flake graphite, or amorphous graphite. The layer of graphite 6 may also consist of one or several graphite sheets. Graphite sheets are flexible and exhibit excellent thermal conductivity and flexibility. Graphite sheets are known to the skilled person, and have been described, for example in US 2015/0301568 A1, in US 6254993 B1, or in WO 2016/094150 A1. If the graphite layer 6 includes graphite sheets, graphite sheets may be used as a single sheet, or as a plurality of sheets, as required in order to fill the space between the PV panel 2 and the thermal collector 3. The graphite sheets may be easily cut to shape, as required by the thermal-photovoltaic hybrid solar system of the invention. Graphite sheets have excellent thermal conductivity, flexibility and durability, making the ideal for being employed in the present invention.

In some embodiments, the graphite sheets used according to the present invention may also have a density ranging from between about 1.50 g/cm³ to about 2.70 g/cm³, such as for example between about 1.50 g/cm³ to about 1.86 g/cm³, about 1.64 g/cm³ to about 2.0 g/cm³, about 1.52 g/cm³ to about 1.94 g/cm³, about 1.84 g/cm³ to about 2.3 g/cm³, or about 2.0 g/cm³ to about 2.7 g/cm³ and still more advantageously from between about 2.1 g/cm³ and about 2.5 g/cm³.

In some embodiments, the graphite sheets may have a thickness from 0.02 mm to 10 mm, such as for example from 0.025 mm to 5 mm, or from 0.05 mm to 2.0 mm, or from 0.1 mm to 1 mm, or from 0.25 mm to 0.75 mm, such as for example about 0.1 mm or about 0.2 mm, or about 0.3 mm or about 0.4 mm, or about 0.5 mm, or about 0.6 mm, or about 0.7 mm, or about 0.8 mm, or about 0.9 mm, or about 1.0 mm. The entire graphite layer may have a thickness from 0.05 mm to 25 mm, such as for example from 0.05 mm to 25 mm, or from 0.1 mm to 10 mm, or from 0.5 mm to 5 mm, or from 1 mm to 3 mm, for example about 0.5 mm, or about 1.0 mm, or about 1.5 mm, or about 2.0 mm, or about 2.5 mm, or about 3.0 mm.

The excellent conductivity of the graphite leads to best possible transfer of calorific heat from the PV panel 2 to the thermal collector 3 via conduction and convection. The flexibility of the graphite allows easy handling during production and durability in case of mechanical strain or stress applied to the thermal-photovoltaic hybrid solar system during production, assembly, installation and use. During use, the solar systems may be exposed to stresses from external mechanical stress, such as wind, objects falling onto a roof, or seismic activity. At the same time, they are exposed to thermal stress from ambient temperature and solar radiation, which also leads to deformation within the thermal-photovoltaic hybrid solar system. It was found that the use of graphite, with its inherent flexibility leads to improved durability and efficiency for ensuring best possible contact, and therefore heat transfer, between a PV panel 2 and thermal collector 3.

Finally, due to the flexibility of the graphite, the occurrence of airgaps between the PV panel and the thermal collector is prevented. This helps to maximize the more efficient conductive heat transfer between the PV panel and the thermal collector.

According to the present invention, the efficiency of the PV panels is improved. At the same time, according to the present invention the efficiency of the thermal collectors is improved. Finally, a synergistic effect is observed by the combination of PV panel and thermal collector.

According to one aspect of the present invention, the advantages of the invention may be obtained with a graphite layer that is essentially pure. As used herein, the term "essentially pure" signifies that a composition comprises a majority of a certain chemical species, such as more than 80 wt.-%, more than 90 wt.-%, more than 95 wt.-%, more than 98 wt.-%, more than 99 wt.-% of the said chemical species.

For example, an essentially pure graphite layer having a purity of 80 wt.-% or more may be sufficient for obtaining the advantages of the invention. The advantages may be more or less pronounced as the purity is raised or lowered, depending on external circumstances. Known common impurities which may or may not affect the properties of the graphite are Fe, Zn, Al, Mn, K, S etc., or minerals such as ash and the like.

According to the present invention, the thermal-photovoltaic hybrid solar cell may be combined with one or more further thermal-photovoltaic hybrid solar cells in order to form a solar system, such as a solar module, or a solar panel. As known to the skilled person in the art, solar panels may be connected in parallel or in series creating an additive voltage or additive current, as the case may be. Solar panels may be combined in such amounts, as to form solar power plants, integrating the thermal-photovoltaic hybrid solar systems according to the present invention. Alternatively, individual thermal-photovoltaic hybrid solar systems may be used as part of small-scale power supply.

According to the present invention, the thermal-photovoltaic hybrid solar system may be integrated into an article, such as for example a roof element or a roof tile. A roof comprising roof elements or roof tiles having thermal-photovoltaic hybrid solar systems according to the present invention integrated, may provide heat to a building, or may be used to generate electrical energy for a building, either as sole power source, or as a complementary power source. Fig. 2 shows a roof comprising a number of roof tiles 7 having integrated thermal-photovoltaic hybrid solar systems according to the present invention, mounted on the roof. According to the present invention, the appearance of a plurality of having thermal-photovoltaic hybrid solar systems may mimic the appearance of a plurality of roof tiles.

It should be noted that the present invention may comprise any combination of the features and/or limitations referred to herein, except for combinations of such features which are mutually exclusive. The foregoing description is directed to particular embodiments of the present invention for the purpose of illustrating it. It will be apparent, however, to one skilled in the art, that many modifications and variations to the embodiments described herein are possible. All such modifications and variations are intended to be within the scope of the present invention, as defined in the appended claims.

## Claims

1. Thermal-photovoltaic hybrid solar system comprising a substantially planar photovoltaic panel and a substantially planar thermal collector, wherein the said photovoltaic panel and the said thermal collector are stacked such that their respective planar faces are substantially parallel, **characterised in that** a layer of graphite is arranged between the said photovoltaic panel and the said thermal collector.

2. Thermal-photovoltaic hybrid solar system according to claim 1, wherein the said layer of graphite comprises flake graphite.

3. Thermal-photovoltaic hybrid solar system according to claim 1 or 2, wherein said layer of graphite comprises one or more layers of graphite sheet.

4. Thermal-photovoltaic hybrid solar system according to claim 3, wherein said graphite layer has a thickness from 0.02 mm to 25 mm and/or wherein each graphite sheet has a thickness from 0.020 mm to 10 mm.

5. Thermal-photovoltaic hybrid solar system according to any one of the previous claims, wherein the said layer of graphite is essentially pure graphite.

6. Thermal-photovoltaic hybrid solar system according to any one of the previous claims, wherein the said photovoltaic panel and the said thermal collector are panel shaped.

7. Thermal-photovoltaic hybrid solar system according to any one of the previous claims, wherein the said thermal collector is of the roll-bond type.

8. Thermal-photovoltaic hybrid solar system according to any one of the previous claims, wherein the said thermal collector is connected to a cooling circuit comprising a cooling fluid.

9. Thermal-photovoltaic hybrid solar system according to any one of the previous claims, wherein the said thermal collector is connected to a cooling circuit comprising a gaseous refrigerant.

10. Thermal-photovoltaic hybrid solar system according to claim 8 or 9, wherein said cooling circuit is used to provide hot water and/or electricity.

11. Thermal-photovoltaic hybrid solar system according to any one of the previous claims, wherein the said thermal collector is heated by heat conduction from the PV panel, and/or by convection from ambient air, and/or by solar radiation.

12. Thermal-photovoltaic hybrid solar system according to any one of the previous claims, which is integrated into an article, such as for example into a roof element.

13. Assembly of thermal-photovoltaic hybrid solar systems as claimed in any one of the previous claims.

14. Use of a thermal-photovoltaic hybrid solar system or an assembly as claimed in any one of the previous claims for providing electrical power and/or hot water to an isolated system, such a ship, or a road vehicle, or a plane, or to a building, such as a family home, or an office building, or to a block of buildings, or to an industrial installation.

15. Use of a thermal-photovoltaic hybrid solar system or an assembly as claimed in any one of the previous claims for feeding electrical power into an electrical power supply system, such as an electricity network, a national grid or a public grid and/or for producing heat to be provided to buildings, industrial plants or greenhouses.
